# EUROPEAN PATENT APPLICATION

(11) **EP 1 199 655 A1**
(43) Date of publication of application: **24.04.2002**
(21) Application number: 01113555.5
(22) Date of filing: 13.06.2001
(51) Int. Cl.: G06F 17/60

(54) **Method for managing rentals of real estate and personal property items over a data communication network**

(30) Priority: 17.10.2000 IT MI002242
(71) Applicant: Gestweb S.p.A., 25124 Brescia (IT)
(72) Inventor: Vinati, Samuele, 25123 Brescia (IT); Vinati, Felice, 25069 Villa Carcina, (Prov. of Brescia) (IT); Berardinelli, Ivan, 25080 Tignale, (Prov. of Brescia) (IT)
(74) Representative: Modiano, Guido, Dr.-Ing.

(57) **Abstract**

A method for managing rentals of real estate and personal property items over a data communication network, comprising the steps of:
entering, by using a data communication network, on the part of users (6) who wish to rent out property items, the type and description of the property item to be rented out;
storing the data related to the property items to be rented out in at least one database (2) connected to a management system (1);
allowing access, by a network server (3), to the at least one database (2) by a plurality of end customers (5) for browsing the database (2) and selecting a property item to be rented.

## Description

The present invention relates to a method for managing rentals of real estate and personal property items over a data communication network.

The present invention also relates to a system for performing said method.

It is known that the increasing expansion of the Internet allows companies and the like to easily conduct electronic trade for selling various products.

However, although the sale of products via the Internet is extremely widespread, it is as yet not possible to rent real estate and personal property items directly via the Internet.

The aim of the present invention is to provide a method for managing rentals of real estate and personal property items over a data communication network.

Within this aim, an object of the present invention is to provide a method for managing rentals of real estate and personal property items which allows a user to directly view the rentable property items and thus rent them directly online, receiving a confirmation of the completed operation.

Another object of the present invention is to provide a method for managing rentals of real estate and personal property items in which the handling of the data is protected.

Another object of the present invention is to provide a method for managing rentals of real estate and personal property items over the data communication network which is highly reliable, relatively simple to provide and at competitive costs.

This aim and these and other objects which will become better apparent hereinafter are achieved by a method for managing rentals of real estate and personal property items over a data communication network, characterized in that it comprises the steps of:
-- entering, by using a data communication network, on the part of users who wish to rent out property items, the type and description of the property item to be rented out;
-- storing the data related to the property items to be rented out in at least one database connected to a management system;
-- allowing access, by means of a network server, to said at least one database by a plurality of end customers for browsing said database and selecting a property item to be rented.

Further characteristics and advantages of the invention will become better apparent from the description of a preferred but not exclusive embodiment of the method according to the invention, illustrated only by way of non-limitative example in the accompanying drawings, wherein:
Figure 1 is a schematic view of a flowchart of the method according to the present invention; and
Figure 2 is a block diagram of the method for connecting to the management system that implements the method according to the present invention.

With reference to the figures, the method according to the invention provides a management of rentals of real and personal property items over a data communication network, such as for example the Internet.

The goal of the method is therefore the online management of any kind of rental of real estate and personal property items.

Before describing the method according to the invention, a rental management system which allows to implement the method according to the invention is described.

The rental management system, also covered by the claims of the present patent application, comprises system administration means 1 which are connected to at least one database 2 and to at least one network server 3, which allows, through the Internet 4, the connection to a plurality of end users 5.

At least one computer 6 which belongs to a user who wishes to place online property items to be rented out is connected to the database 2 via the Internet 4.

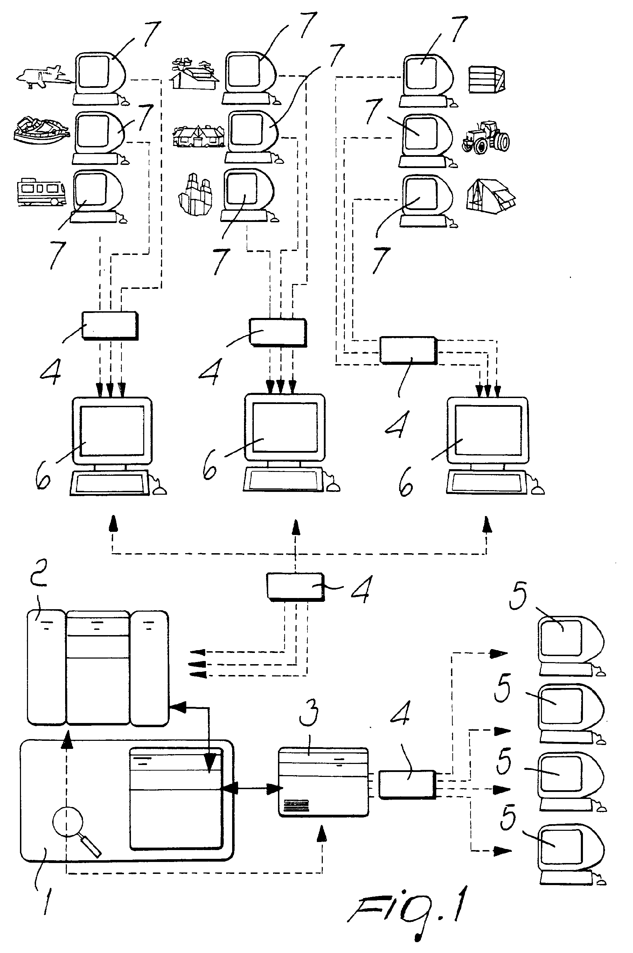

Figure 1 illustrates, by way of example, the connection of three users 6 to the database 2.

The property items to be rented out by the users 6 can be posted online either directly by said users 6 or, additionally or alternatively, by additional users 7 who act as collaborators of the users 6.

Substantially, the method according to the invention is as follows.

The user connects to the online rental management system 1; the term "user" initially designates, in this case, the user 6 who wishes to post property items online that he wishes to rent out and/or the user 7 who acts as a collaborator of the user 6.

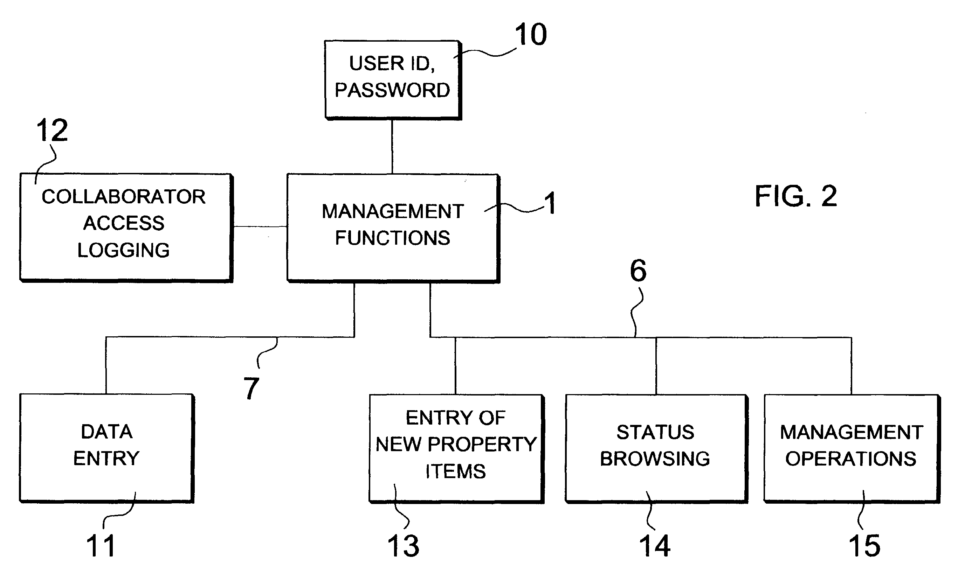

A personal identification number and a password, schematically designated by the reference numeral 10 in the flowchart of Figure 2, are assigned to each one of said users 6 and 7.

Each identification number and each password automatically identify a user type, i.e. a user 6 or a user 7, and therefore make provisions for the presentation of a menu which is appropriate for the type of user who connects at that given moment.

The user 6, 7 thus connects to the management system, designated in Figure 2 by the same reference numeral 1 used in Figure 1, and different possibilities are offered depending on whether the user is a user 6 or a user 7.

If the connected user is a user 7, i.e., a collaborator of the user 6, he can only enter the data 11 related to real estate and personal property items of a user 6 and for example the period for which the user 6 has decided to make the property item available and the price thereof.

Each property item can have an arbitrary number of periods available for rental and each period can have prices which are diversified also according to the rental period.

For security purposes, the user cannot alter the data of a property item after confirming them; any incorrect data can be amended only by the management of the system 1, to which the errors are reported.

The network connection of the user 7 is logged, 12, by the management of the system 1 so that the system manager can calculate the remuneration of the user 7. This logging can provide, for example, the date of the work session, the internal code of the user 7, the duration of the session and the number of data items entered online.

The connection of the user 6, who as mentioned is the user who makes the items to be rented out directly available, instead allows the user 6 to enter new property items, step 13, to browse the status of his property items, step 14, and to perform management operations, step 15.

Differently from the user 7, the user 6 can directly modify the data related to his property items.

Furthermore, he can browse the status of his property items, confirm any reservation made by the management system 1, receive requests from the management system 1, and be informed of the financial transactions in which he is involved.

The connection to the database can be performed, always by means of a user identifier and a password, also by the personnel of the management system 1 so as to be able to amend the existing data, eliminate old data, create new profiles of users 6, users 7 or personnel of the management system 1.

The management system 1 thus receives the reservations from the customers 5 via the Internet 4 by means of a form which the customer fills in online, and the management system 1 sends a confirmation request, for example via e-mail or fax.

The management system 1 can furthermore check the account statements of the collaborators 7 and of the users 6 and give instructions for charging the credit cards used by the end customers 5.

Furthermore, the management system 1 can access the functions for modifying the data pre-entered by the users 6 and by the users 7 and delete them if necessary.

The reservation of a property item by an end customer 5 occurs as follows.

Through the first search step of online, the user identifies the property item he is interested in and after this initial step can proceed with a reservation step.

In order to request the reservation, the end customer 5 fills in an appropriate form with the complete data and is then invited to deposit a sum of money constituted by two amounts: part of the fee that the user 6 requests to rent out the property item plus an amount which will be deducted by the management system 1 as commission.

At this point, the management system 1 queries the database 2 to check whether the requested property item is still available or not, in order to appropriately inform the end customer 5.

If the property item is not available, the management system 1 warns the customer, for example by e-mail, fax or telephone, that the property item is not actually available and that therefore the sum deposited by credit card by the end customer 5 will not be drawn by the management system 1.

If instead the property item is available, the management system 1 confirms the transaction to the bank and the system 1 sends an e-mail or a fax to the end customer 5 to notify him that the reservation has been successful and that therefore the advance deposit has been charged to the card of the end customer 5.

In this case, the management system completes the confirmation with a series of additional information items, such as the reservation number and detailed information on the property item rented by the end customer 5.

At the same time, the same information is sent to the user 6, who thus has a direct confirmation of the reservation that has been made.

At this point, the management system 1 fills in a form which warns that the property item is not available for that given period for which the end customer 5 has reserved it.

In this manner, the online rental management system according to the present invention on the one hand allows multiple users to post their property items online for rental, allowing them to constantly monitor their situation, and on the other hand allows the management system to act as an interface between the users 6 and the end customers 5, managing the entire system.

In practice, it has been found that the method according to the invention fully achieves the intended aim and objects, since it allows to perform rentals of real estate and personal property item online with a high assurance of security of the data posted online and with the possibility to promptly modify the data of the property item to be rented out or to update the property items to be rented out.

The method thus conceived is susceptible of numerous modifications and variations, all of which are within the scope of the inventive concept; all the details may furthermore be replaced with other technically equivalent elements.

The disclosures in Italian Patent Application No. MI2000A002242 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for managing rentals of real and personal property items over a data communication network, **characterized in that** it comprises the steps of:
entering, by using a data communication network, on the part of users who wish to rent out property items, type and description of a property item to be rented out;
storing data related to the property items to be rented out in at least one database connected to a management system;
allowing access, by means of a network server, to said at least one database by a plurality of end customers for browsing said database and selecting a property item to be rented.

2. The method according to claim 1, **characterized in that** said users who wish to enter data of property items to be rented out comprise users who own said property items and users who are collaborators of said users who own said property items.

3. The method according to claim 2, **characterized in that** said collaborator users can post online only part of the data related to said property items.

4. The method according to claim 2, **characterized in that** the access by said users who own the property items and by said collaborator users to said data communication network and to said at least one database comprises the steps of:
entering a user identifier and a password;
accessing said management system;
if the user who accesses said management system is a collaborator user, allowing entry of data related to said property items to be rented out;
if the user who accesses said management system is a user who owns said property items, allowing online posting of new property items, browsing of the status of said property items and execution of operations for managing said property items.

5. The method according to claim 4, **characterized in that** the access of said collaborator user to said at least one database is logged in order to allow said management system to calculate a remuneration for said collaborator user.

6. The method according to claim 1, **characterized in that** operators of said management system connect to said at least one database by using a user identifier and a password.

7. A system for managing rentals of real estate and personal property items over a data communication network, **characterized in that** it comprises:
management means suitable to control the system for managing rentals;
at least one database which is connected to said management means and can be connected, via a data communication network, to a plurality of users who wish to rent property items via said data communication network;
at least one server which is suitable to connect said management means to a plurality of end customers via said data communication network.

8. The system according to claim 7, **characterized in that** it comprises a plurality of users who are collaborators of said users who wish to rent out said property items and are connected to said users who wish to rent out said property items via said data communication network.

9. The data communication network according to claim 7, **characterized in that** said at least one database can be queried simultaneously by said users who wish to rent out said property items, by said end customers and by personnel assigned to the management of said management means.
